# EUROPEAN PATENT SPECIFICATION

(11) **EP 3 703 018 B1**
(45) Date of publication and mention of the grant of the patent: **09.08.2023**
(21) Application number: 20159401.7
(22) Date of filing: 25.02.2020
(51) Int. Cl.: G07D 7/20, G07D 7/12, G06V 10/82, G06F 18/2431, G06V 10/764

(54) **CASH-HANDLING MACHINE**
BARGELDHANDHABUNGSMASCHINE
MACHINE DE GESTION D'ARGENT LIQUIDE

(30) Priority: 26.02.2019 GB 201902576
(43) Date of publication of application: 02.09.2020
(73) Proprietor: Glory Global Solutions (International) Limited, Basingstoke, Hampshire RG24 8WZ (GB)
(72) Inventor: STEINLIN, Andreas, 3172 Niederwangen (CH); GLAUSER, Simon, 3172 Niederwangen (CH); JULIA, Valentin Camille Aimé, 3172 Niederwangen (CH); RODRIGUEZ RODRIGUEZ, Xabier, 3172 Niederwangen (CH); DUFOUR, Pascal André, 3172 Niederwangen (CH)
(74) Representative: Page White Farrer

(56) References cited:
- KR-A- 20190 004 807
- US-A- 5 729 623

## Description

### Technical Field

The present disclosure relates to a cash handling machine with embedded processor and software for recognizing denominations of cash.

### Background

Various machines are known which are capable of receiving and sorting physical articles that include cash, but which may also include other articles inserted into the machine's input aperture which are not in fact true or acceptable cash. These articles may include articles that are simply not cash (e.g. other arbitrary pieces of paper), unaccepted currencies, or cash that is so badly damaged or defaced that it can no longer be recognized or accepted as useable cash. The articles may also include counterfeit cash or cash which has been stained by anti-theft installations.

Examples of such machines include cash counting or sorting machines, teller cash acceptors (TCAs) or teller cash recyclers (TCRs), automatic teller machines (ATMs), and vending machines. They may include self-service machines which the end-user uses him/herself, or assisted service machines which the end-user uses with the assistance of e.g. a member of staff. In general any such machines may receive and sort cash in the form of banknotes and/or coins.

There are typically at least two aspects to checking whether a note can be accepted: recognition and authentication. Recognition means recognizing whether the articles are cash; as opposed to say, some other piece of paper inserted into the machine, or an unrecognized currency that the machine is not designed to accept. Sometimes cash may also be rejected as unrecognized if it is too badly damaged or defaced. Recognition typically also comprises recognizing which denomination of cash has been received. Authentication on the other hand means checking that a received article of what is ostensibly cash is in fact legitimate cash (legal tender), i.e. not counterfeit. Cash stained by anti-theft inks or other such anti-theft measures may be rejected as unrecognized, or may be recognized but then not authenticated (or may fail another test such as fitness), depending on the condition, the anti-theft measure and the tests applied.

Recognized cash and other, non-recognized articles need to be sorted to different destinations. For instance, recognized cash may be sorted into a receptacle such as a secure cash box, whereas non-recognized articles may be rejected by being output back to the user. Typically, amongst the recognized cash, genuine and counterfeit cash are required to be sorted to different destinations from one another as well. E.g. in some jurisdictions, certain types of machines are required to retain counterfeit notes in a separate receptacle.

Nowadays an artificial neural network implemented on a computer can be used to recognize cash. For instance a convolutional neural network (CNN) can be used to recognize a banknote based on an image of the banknote.

US5729623 A describes a bill-recognition apparatus that includes a neural network having a learning capability and performs high-efficiency pattern recognition of seven kinds of U.S. dollar bills. Pattern image data optically inputted through a sensor is compressed using plurality of column masks, and then a plurality of values representative of images (slab values) are determined.

### Summary

However, cash handling machines such as counting machines and TCRs typically need to sort large volumes of cash of multiple different denominations and/or currencies at a relatively fast rate. For instance, purely by way of illustrative example, single bill validators may operate at around 1 note per second, and TCRs at 5 to 10 notes per second. A modern cash counting machine may sort and count all denominations of notes from amongst two or three different currencies (e.g. GBP, EUR and USD) at a rate of 17 to 50 notes per second. A neural network could be implemented on an embedded processor and memory of the machine for recognizing the notes. But if one large neural network is trained to recognize and distinguish between all possible denominations and/or currencies that a cash-handling machine might be expected to accept, then the inference stage will consume a lot of processing power each time a note or coin has to be recognised. Also, central banks sometimes issue a new design of note or coin. In this case, the whole neural network would have to be retrained and reinstalled on all machines each time there is an update to the design of even one denomination of one currency. E.g. say the UK government issues a design for a new E20 note, then the whole neural network will need to be retrained even though the design of all the Euro and US dollar notes remains the same, as well as all other UK notes. Therefore this also incurs a high computational burden at the training phase, and even worse in the deployment to the machines in the field which do not necessarily have remote connectivity.

It would be desirable to provide a technique for using neural networks to recognize cash that mitigates one or more such issues or similar.

According to one aspect disclosed herein, there is provided a cash handling machine according to claim 1 comprising: a cash handling mechanism for receiving physical articles including cash, and sensing equipment comprising one or more sensors arranged to sense one or more properties of each of the articles received by the cash handling mechanism. The cash handling machine further comprises: processing equipment comprising one or more processors, the processing equipment being arranged to receive corresponding sensor data from the sensing equipment indicative of the sensed properties of each of the received articles; and memory comprising one or more memory devices, the memory storing code arranged to run on the processing equipment. The code comprises a plurality of neural networks arranged in a series ordered from first to last, each trained to classify which of a respective set of classes the articles belong to based on the corresponding sensor data. The set of classes of each respective neural network comprises a different respective subset of one or more respective recognized classes classifying a respective one or more types of cash recognised by the respective neural network, and further comprises an unrecognized class into which all other articles other than the respective recognized types are classified. the one or more types of cash recognized by each of the respective neural networks (consist of one or more denominations of a respective currency, the respective currencies of at least some of the neural networks being different than one another. The code is configured so as, when run on the processing equipment, then for each of the articles received by the cash handling mechanism to perform the following algorithm starting with the first neural network in the series: i) use the neural network to classify the article into one of the respective set of classes based on the corresponding sensor data; then ii) if the classification determined in i) is one of the respective recognized classes, control the cash handling mechanism to accept the article, or do so subject to one or more further tests; but iii) if the classification in i) is the unrecognized class, then if the neural network is not the last in the series repeat i)-iii) with the next neural network in the series, but if the neural network is the last in the series control the cash handling mechanism to reject the article.

According to further aspects disclosed herein there are provided a corresponding method and computer program, and a corresponding method of training the neural networks.

The recognition is divided into stages, with a respective neural network at each stage to recognize a different subset of notes and/or coins. For instances the subset tested for at each stage could be a different currency, or different individual denomination, or different variant of a currency (e.g. English or Scottish GBP).

This means that if a note or coin is recognized in the first stage, then the recognition can be terminated with no need to revert to any of the subsequent stages. Performing inference using only a smaller neural network trained to classify amongst only a specific subset of types is less computationally intensive than using one large neural network trained on all possible types together, assuming the article is found in that subset. One large network would actually be more compute-efficient than a series of multiple smaller networks if the process ends up going down to the last in the series before finding a recognized class. E.g. if a machine is configured to use EUR, GBP and USD, a single network that can recognize all currencies in one shot is less computationally intensive than executing three smaller networks, one for each currency, before getting a positive result. However, by dividing the recognition into stages, this means that often the later stages will not be needed at all. For instance, typically for any given machine, the majority of cash is all of the same currency, and thus processing time can be reduced if that currency is evaluated first. Thus it is possible to get the results for specific currencies earlier (due to less computation) than for others, earlier than if using a single network.

Further, if there is an update to only one type of cash, e.g. one denomination or currency, then the neural network of only the affected stage need be retrained, and can be replaced with the retrained version in a modular fashion.

### Brief Description of the Drawings

To assist understanding of embodiments of the present disclosure and to show how such embodiments may be put into effect, reference is made, by way of example only, to the accompanying drawings in which:
Figure 1 is a schematic block diagram of a cash-handling machine,
Figure 2 is a schematic block diagram of an algorithm for recognizing cash, and

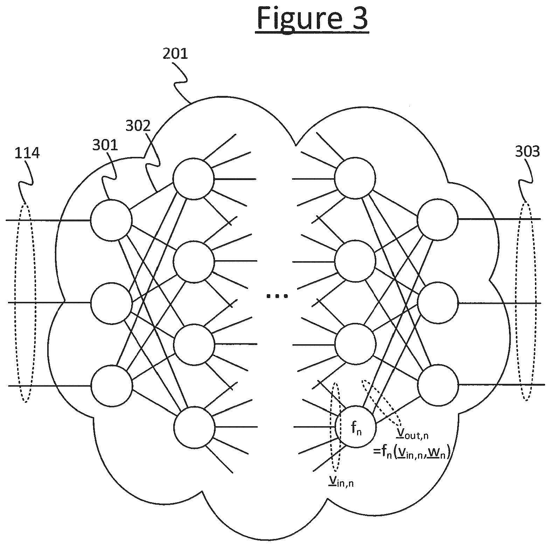

Figure 3 is a schematic illustration of an artificial neural network.

### Detailed Description of Embodiments

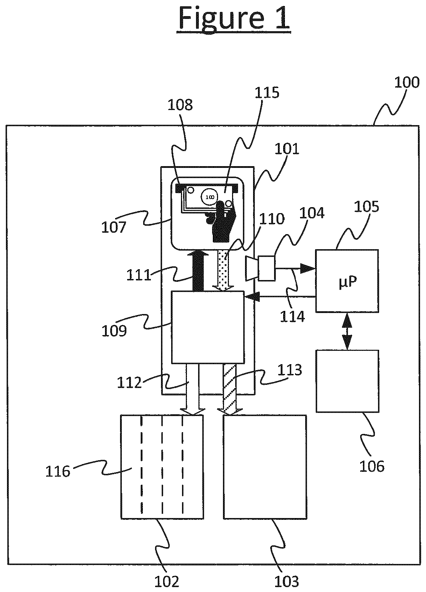

Figure 1 shows an example of a cash handling machine 100 in accordance with embodiments disclosed herein. The cash handling machine 100 may for example take the form of a cash counting machine, cash sorting machine, teller cash acceptor (TCA), teller cash recycler (TCR), automatic teller machine (ATM) or vending machine. For instance, a TCA is a machine that is placed behind a cashier's desk in a bank or such like, into which the cashier deposits cash. A TCR is a version of a TCA that can also return cash deposited into the machine. In another exemplary application the machine 100 may take the form of a cash counting machine that counts cash at a rate of the order of magnitude of 1000 notes per minute.

The cash handling machine 100 comprises a cash handling mechanism 101, sensing equipment 104, processing equipment 105, and memory 106. In embodiments the cash handling machine comprises a first receptacle 102 for holding accepted cash and/or a second receptacle 103 for retaining counterfeit cash. There will also be a destination for cash rejected as unrecognized, discussed shortly. As will also be discussed in more detail shortly, the memory 106 stores code arranged to run on the processing equipment 105 in order to recognize cash 115 based on data 114 from the sensing equipment 104. In embodiments the processing equipment 105 and memory 106 are integrated into the same housing as the cash handling mechanism 101 and sensing equipment 104, to enable rapid and secure recognition in applications such as cash counting and TCAs/TCRs. The first and/or second receptacles could be integral to the housing, external, or removable cassettes.

The cash handling mechanism 101 comprises a cash interface 107 which comprises at least one receive aperture 108 for receiving articles 115 including cash, typically from a user. The cash interface 107 comprises a cash receiving mechanism for receiving the articles 115 into the machine 100 via the aperture 108. The aperture 108 may for example take the form of a slot for receiving notes or coins, or a funnel for receiving coins. Optionally the cash interface 107 may comprise multiple apertures 108 designed for receiving different types of cash, e.g. one for notes and another for coins. Alternatively the machine 100 could be dedicated to only handling notes or only coins.

Physical articles herein means tangible items or objects (as opposed to, say, data or software). The articles 115 will include at least some cash. Cash for the present purposes means physical (tangible) monetary tokens, i.e. coins and/or banknotes (physical items or pieces of cash, where a piece or item of cash means one coin or note). However, the inserted articles 115 will also sometimes include other articles that are not legitimate cash or at least cannot be recognized or accepted as cash. For instance these may include unaccepted or unrecognized currencies, or articles that are simply not cash at all such as other pieces of paper or material inserted by a careless user or vandal. The inserted articles 115 may also include damaged or defaced cash, such as tattered or graffitied notes. Whether or not these can be recognized as cash depends on the condition of the coin or note, and on the ability of the recognition algorithm being used. The inserted articles 115 may also include counterfeit cash. These may be recognized as cash by the recognition algorithm, but then fail a subsequent authentication.

In embodiments the cash interface 107 may comprise a rejection mechanism for rejecting received articles 115 that are not recognized as cash. Alternatively the cash handling machine 100 may comprise a third receptacle (not shown) for holding articles 115 not recognized as cash.

The cash handling mechanism 101 further comprises a cash sorting mechanism 109 (sometimes also called a diverter). The cash handling mechanism 101 also comprises a receive path 110, a reject path 111, an accept path 112, and optionally a counterfeit path 113. These are different physical, mechanical paths for passing notes between parts of the machine 100.

The cash sorting mechanism 109 is coupled to the cash interface 107 via at least the receive path 110. The cash interface 107 is arranged to automatically pass the received articles 115, received via the aperture 108, to the cash sorting mechanism 109 via the receive path 110.

The sensing equipment 104 of the cash handling machine 100 comprises one or more sensors arranged to sense one or more properties of each of the received articles 115 being received via the receive path 110, and to supply sensor data 114 indicative of the sensed property/properties of each article 115 to the processing equipment 105. In embodiments the sensor(s) 104 comprise at least an image sensor arranged to capture at least one image of part or all of each of the received articles 115. In this case the sensed property of each of the received articles 115 comprises the image of the received article 115 and the sensor data 114 comprises image data representing the image of the article 115. The image could comprise an image captured in the visible, infrared and/or ultraviolet range, e.g. at resolutions between 5 and 600 dpi. In embodiments, the sensing equipment may comprise multiple image sensors arranged to capture images of different parts of each received article 115, e.g. arranged to capture an image of the front and back face of each note or coin (or article 115 presented as a note or coin). In this case the image data comprises data representing the images of each part (e.g. side) of each article 115. And/or, separate images may be captured and processed in different colour space channels, e.g. RGB or YUV. In further alternative or additional possibilities, other types of sensor could be included, e.g. for sensing the weight, thickness, opacity, and/or material of each received article 115, and/or testing for presence of an embedded marker in each received article 115.

The processing equipment 105 comprises one or more processors, e.g. CPU(s), FPGAs, accelerator co-processor(s) such as graphics processing units(s) (GPUs) and/or artificial intelligence (Al) accelerator processor(s), and/or application specific processor(s) (ASICs). The memory 106 (i.e. storage) comprises one or more memory devices employing one or more types of storage medium, e.g. one or more electronic media such as EEPROM (or "flash" memory) or solid state drive (SSD), one or more magnetic media such as a magnetic disk or hard disk drive, and/or one or more optical storage media. Software (runnable code) is stored on at least one of the one or more memory devices of the memory 106, and arranged to run on at least one of the one or more processors of the processing equipment 105. This code may take the form of executable machine code that is run by being executed directly on the at least one processor, or higher-level code run on an interpreter executed on the at least one processor (e.g. a virtual machine), or using just-in-time (JIT) compilation technology.

The code is configured so as, when thus run, to operate the at least one processor of the processing apparatus 105 to determine whether or not each of the received articles is recognized as cash, and in embodiments to also determine which denomination and/or currency. Optionally it also authenticates whether, if recognized, the article 115 is also authenticated as genuine cash.

The processing equipment 105 is electrically coupled to the sorting mechanism 109 and thus arranged to control the sorting mechanism 109 to divert the received articles 115 along a selected one of the output paths 111, 112, 113. The code is configured so as, when run on the at least one processor of the processing equipment 105, to cause the processing equipment 105 to control the sorting mechanism 109 to select which path 111, 112, 113 to divert each received article 115. The code is configured to make the selection in dependence on the determination by the recognition and optionally authentication process for each respective article 115. If the article 115 is not recognized as cash it is diverted along the reject path 111. If the article 115 is recognized as cash, it is diverted along the accept path 112 or counterfeit path 113. In embodiments the article 115 is diverted along the accept path 112 if it is recognized as cash and authenticated as genuine cash, but diverted along the counterfeit path 113 if it is recognized as cash but not authenticated.

In embodiments the accept path 112 leads to a first destination in the form of the first receptacle 102, i.e. a holding area (sometimes also called a pocket in the art) for holding the accepted, recognized cash. The first receptacle 102 may for example take the form of a removable cassette, an integral chamber, a bag, or an open tray. Optionally the first receptacle 102 may be a secure, closed receptacle comprising some form of security mechanism such as a mechanical or electronic lock, so that only an authorized party can retrieve the recognized cash from the first receptacle 102.

In embodiments the accept path 112 may comprise multiple sub-paths for different currencies and/or denominations. In this case the code is configured to control the sorting mechanism 109 to send each accepted note or coin 115 down the sub-path corresponding to its recognized currency and/or denomination. The first receptacle 102 may comprise a plurality of corresponding compartments 116, e.g. sub-chambers or channels, a respective one for each of the sub-paths. Each compartment 116 is arranged to receive the cash of the corresponding currency and/or denomination from the respective sub-path.

In alternative embodiments however, the first receptacle 102 may comprise only a single compartment for all currencies and/or denominations, or the cash handling machine 100 need not necessarily comprise the first receptacle 102 at all (in which case the accept path 112 may lead to another form of first destination, e.g. an output slot of the machine 100). For instance this could be the case for a simple cash sorting machine that simply filters out unrecognized articles 115 from a batch.

In embodiments the counterfeit path 113 leads to the second receptacle 103. Again this may for example take the form of a removable cassette, an integral chamber, a bag, or an open tray. Preferably the second receptacle 103 is a closed, secure receptacle comprising a security mechanism such as a mechanical or electronic lock, so that only an authorized party can retrieve the counterfeit cash from the second receptacle 103.

In embodiments the counterfeit path 113 may comprise multiple sub-paths for different currencies and/or denominations, and the code may control the sorting mechanism 109 to send each detected counterfeit note or coin 115 down the sub-path corresponding to its recognized currency and/or denomination. The second receptacle 103 may comprise a plurality of corresponding compartments (not shown), e.g. sub-chambers or channels, one for each of the sub-paths; each compartment being arranged to receive the cash of the corresponding currency and/or denomination from the respective sub-path.

In alternative embodiments however, the second receptacle 103 may comprise only a single compartment for all currencies and/or denominations, or the cash handling machine 100 need not necessarily comprise the first receptacle 103 at all. In the latter case the counterfeit path 113 may lead to another form of second destination, e.g. an output slot of the machine 100. Alternatively the machine 100 need not necessarily be provided with counterfeit detection nor a counterfeit path 113, and counterfeit notes may be sorted into the first receptacle 102. As another alternative the code does perform counterfeit detection but counterfeit notes are diverted along the reject path 111 the same as unrecognized articles.

In embodiments the reject path 111 leads back to the rejection mechanism of the cash interface 107, where the unrecognized articles 115 are ejected from the machine 100 back to the user. This could be through the same aperture 108 as used to receive the article 115, or a different, dedicated reject aperture (not shown). Alternatively the reject path 111 may lead to a third receptacle (not shown) where unrecognized, rejected articles 115 are held. Again this receptacle may comprise a cassette, integral chamber, bag or tray.

More generally, a recognized article may be accepted or may be accepted subject to a further authentication (and/or one or more further tests such as fitness). Acceptance may mean sending the article to a destination for recognized articles. Rejection may mean sending the article to a destination for rejected articles. Acceptance may mean sending the article to a first destination, whilst recognized but non-authenticated articles may be sent to a second destination different than the first destination. Unrecognized articles may be sent to a third destination different than the first and second destinations. Alternatively, both unrecognized articles and articles that are recognized but non-authenticated may be sent to the same second destination, different than the first destination.

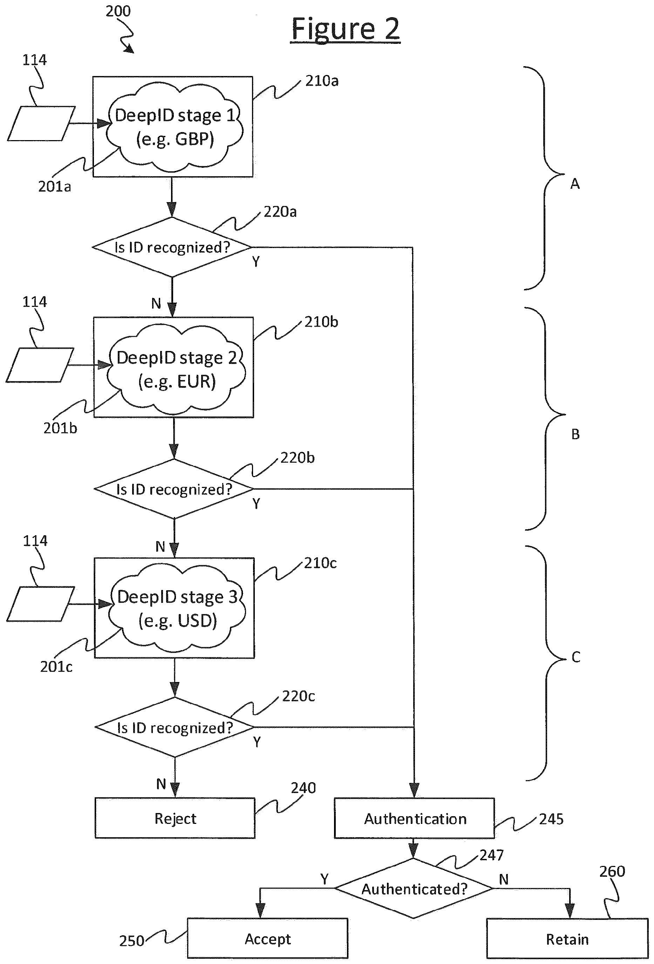

Figure 2 illustrates an algorithm 200 comprised by the code run on the processing equipment 105 in accordance with embodiments disclosed herein. This is an example of the process by which the code performs the determination as to whether each article 115 is recognized, and in embodiments also authenticated, and by which it makes the selection as to which path 111, 112, 113 to sort the article 115 along.

The algorithm 200 comprises a plurality of stages. Three stages A, B, C are illustrated by way of example, but it will be appreciated that there could be more than three stages, or more generally any number from two upwards. The stages are arranged in a series, having an order from first to last in the series. So A is the first in the series, then B is the next after A, and then C is the next after B and so forth. In the illustrated example C is in fact the last in the series. The different stages A, B, C are applied in turn, in the order they are arranged in the series.

Each stage A, B, C comprises a respective recognition block 210, and a respective recognition decision block 220. The algorithm also comprises a rejection block 240 and acceptance block 250; and optionally an authentication block 245, authentication decision block 247, and retention block 260. Each of these takes the form of a functional unit implemented in software in the memory 106, arranged to run on the processing equipment 105.

The recognition block 210 at each of the different stages A, B, C comprises a different respective neural network 201a, 201b, 201c. The neural networks 201a, 201b, 201c are different at least in that their weights are different, having been trained to recognized different sets of classifications - in this case, different types of cash (e.g. different currencies or denominations). The different neural networks 201a, 201b, 201c may comprise the same or different forms or topology of network. E.g. embodiments use different models for different currencies which run on the same network topology.

As will be familiar to a person skilled in the art, a neural network 201 comprises a large network of nodes 301 and edges 302 implemented in software. Each edge 302 inputs to and/or outputs from at least one node 301. Some edges 302 form the input 114 to the network 201, some form the output 303 of the network 201, and some connect between nodes 301 within the network 201 (i.e. output from one node 301 to the input of another node 301). The network 201 may have multiple input edges forming an input vector, in this case the sensor data. E.g. each input vector may comprise the image data 114 of an image of a given one of the received articles 115 (and/or data derived from the image data 114 being indicative of one or more visual properties of the article 115). The output 303 of the network 301 may comprise one or more edges 302, which in the case of multiple output edges thus form an output vector. Within the network 201, each node 301 represents a function of its input edge(s) 302, the result of which is output on its output edge(s) 302. Each node 301 is also parameterized by one or more tuneable parameters called weights (not necessarily multiplicative weights, though that is one possibility). In general the function could be anything, depending on the kind of neural network, and different nodes in a given network can represent different functions and/or be part of different layers.

The idea is to train the network 201 to be able to recognize the input data 114 as belonging to one of a set of possible classes. The input vector 114 represents the data which the network 201 is to learn to classify, and the output 303 represents its estimated classification. In a training phase before deployment, the network 201 is trained based on a batch of training data. The training data comprises multiple data points, each comprising an instance of the input vector 114 labelled with a respective one of the set of possible classifications that the network 201 is to be trained to recognize. Over the many data points in the training data, the weights of the nodes 301 are tuned to try to minimize the overall error between the classification labelled in the training data and the estimated output classification 303 generated by the network 201. Techniques for doing this are, in themselves, known in the art, e.g. stochastic gradient descent. Once the network 201 has been thus trained, then in a subsequent inference stage it can be used to infer an output classification 303 based on further, unlabelled instances of the input vector 114 presented at its input.

In embodiments the input sensor data of each input vector comprises the image data of one or more images 114 of the corresponding received article 115. Alternatively or additionally, each input vector may comprise data derived from the image(s) 114 indicative of one or more visual features of the image; and/or data from one or more other kinds of sensor. Embodiments herein may be described in terms of an example where the input 114 of each network 201 directly represents the original image of the article 115, but it will be appreciated this is not necessarily limiting.

In embodiments each of the neural networks 201 comprises a convolutional neural network (CNN). CNNs are particularly suited to recognizing visual images.

In the present example, each input vector 114 in the training data may comprise the image(s) of a possible article 115 that may be presented to the machine 100. In embodiments each input vector actually comprises multiple images from different sensors 104. For instance, embodiments may use the images from the blue channels from the front and back, and the transmissive blue. These multiple images form the channels. E.g. instead of a colour image that has RGB (red, green blue) channels, the three blue channels are used.

The training data will include at least different examples of the types of cash (note and/or coin) that the algorithm 200 is to be trained to recognize. It will also include examples of things that should not be recognized as cash in the particular stage in question (e.g. non cash articles, and/or cash of a different type than the present stage is being trained for). Preferably the training data will also include examples of badly damaged, stained and/or defaced notes or coins. In embodiments the training data may also include some images of counterfeit cash (which may be recognized as cash, but later be further processed by the authentication block 245). Each example image in the training data is also labelled (e.g. by a human trainer) with its actual classification, e.g. its currency and/or denomination of cash, such as GBP5, GBP10, GBP20, GBP50; or EUR5, EUR10, etc. The label of some examples may instead indicate that it is not to be recognized as cash. This could be because it is a different currency than being trained for, or simply not cash at all (e.g. a random piece of paper). The damaged, defaced and/or stained cash (of the desired currency) is preferably labelled as cash so as to train the network to recognize this as cash despite the damage, defacement and/or staining.

The set of classes which into which each of the different neural networks 201a, 201b, 201c is trained to classify its inputs 114 comprises a different respective subset of one or more recognized classes, corresponding to a respective subset of one or more types of cash. The different respective types of cash recognized by the neural network 201a, 201b, 201c at each respective stage A, B, C may be for example different currencies, different denominations, or different variants within a currency (e.g. different designs). For instance, the neural network 201a in the first recognition block 210a may be trained to recognize one or more classes of a first currency such as Pounds Sterling (GBP), the neural network 201b in the second recognition block 210b may be trained to recognize one or more classes of a second currency such as Euros (EUR), and the third neural network 201c in the third recognition block 210c may be trained to recognize one or more classes of a third currency such as United States Dollars (USD). As another example each network 201 in the series could be trained to recognize a different respective denomination of a given currency. E.g. one neural network 201a may be trained to recognize 5GBP notes, and the next neural network 201b in the series 10GBP notes, etc. As another example each network 201 in the series could be trained to recognize a different design variant within a given currency. E.g. one neural network 201a may be trained to recognize English GBP notes, and another 201b Scottish GBP notes; or one paper notes and one polymer versions of the same notes. It is also possible to combine several currencies into the same neural network.

In addition, the set of classes into which each neural network 201a, 201b, 201c is trained to classify its inputs 114 further comprises a respective "other" class, or the "unrecognized" class. This is a classification into which anything not covered by one of the network's respective subset of recognized classes is classified. This may also be termed herein a "super class", in that it covers all other articles 115 other than the specific recognized types of cash of the respective neural network 201. That is, each neural network 201 does note only classifying into a best estimate of one of a set of finite, specific classes based on every example labelled with the same classification in the training data having had similar properties). Instead, in the present case, one of the classes covers various articles which may have very different properties (any article 115 having a combination of properties other than classified by one of the recognized classes). E.g. for a neural network 201a at a stage A trained to recognize GBP, then that neural network 201a will be trained to classify all EUR, USD and other currencies, and non-cash, all under the same "unrecognized" class (i.e. an "other" or "outlier" class). Whilst for another of the neural networks 201b at another stage B trained to recognize EUR, then that neural network 201a will be trained to classify all GBP, USD and other currencies, and non-cash, all under the same "other" or "unrecognized" class.

As mentioned, the differently-trained neural networks 201a, 201b, 201c for recognizing the different types of cash are arranged in a series: a first one of the neural networks 201a in a first block 210a of a first stage A, a second one of the neural networks 201b in a second block 210b of a second stage B, etc.

The output 303 of the respective neural network 201 at each stage A, B, C is operatively coupled to a respective recognition decision block 220 of that stage. The respective decision block 220 receives the estimated classification 303 output by the respective neural network 201 and makes a decision. For instance in embodiments the output 303 may take the form of an output vector, with each element representing a different possible class into which the respective network 201 can classify its input 114. E.g. if the network 201 is trained to recognize a set of denominations of GBP note, then the output vector 303 may comprise five elements each representing a different respective one of the classifications GBP5, GBP10, GBP20, GBP50, and the "other" class. The value of each element could be "soft", i.e. a probability rather than a binary yes/no value. E.g. an output vector [0.01, 0.03, 0.93, 0.02, 0.01] may be used to represent a 1% probability that the article 115 represented in the input data 114 is a GBP5 note, a 3% probability that it is a GBP10 note, a 93% probability that it is a GPB20 note, a 2% probability that it is a GBP50 note, and a 1% probability that it is something else (which could include other currencies and/or non-notes). However this is not essential. In other embodiments the neural network 201 could output a binary "one-hot" vector of the form [0, 0, 1, 0, 0] or such like, or even a single scalar value, representing its best guess at the classification.

The stages A, B, C are triggered in turn, with the respective neural network 201 at each successive stage B, C only being triggered to perform its respective inference (i.e. to generate the respective classification for the current target article 115) if the current stage A and any previous stages have failed to recognize the article 115 in question (i.e. have placed it in the unrecognized class).

For a given input article 115, at each stage A, B, C the respective decision block 220 receives the classification 303 of that article 115 from the respective neural network 201 of the respective recognition block 210 at the respective stage A, B, C. Based on this, the respective decision block 220 determines where the algorithm 200 will branch next. If the currently analysed article 115 was recognized by the respective neural network 210 as belonging to one of the recognized classes, then the respective decision block 220 causes the algorithm 200 to branch to the authentication block 245 where this recognized item of cash is further analysed to check whether it is authentic or counterfeit. However, if the article 115 in question was classified by the respective neural network 210 as belonging to the unrecognized class (the "other" class"), and if the current stage A, B is not the last in the series, then the respective decision block 220 causes the algorithm 200 to branch to the next recognition block 210 in the series to check whether the article 115 can be recognized as one of the types of cash recognized by the respective neural network 201 of that stage. If on the other hand the current stage is the last in the series (stage C in the illustrated example), and the article 115 in question has still not been recognized (is still being classified by the respective neural network 210c as belonging to the unrecognized class), then the respective decision block 220 causes the algorithm 200 to branch to the reject block 240. The reject block 240 controls the cash handling mechanism 101 to reject the current article 115, e.g. ejecting it via the cash interface 107.

In embodiments that use a soft classification, the determination of which class the article 115 belongs to may comprise selecting the classification with the highest probability, and/or comparing to a threshold. E.g. embodiments may use the highest probability providing it is both: over a threshold, and predetermined percentage (e.g. say 10%) greater than the second highest probability.

As mentioned, the neural network 201 of each successive stage B, C (each but the first A) is only triggered to perform its respective inference if-and-when the article 115 is not recognized by the preceding stage (was classified in the class "other" by the preceding stage). This has the advantage that the processing resources of each successive stage are only incurred if the article 115 is not recognized by an earlier stage. Some articles 115 will need the last stage C to be recognized, but some will not, and some will be recognized by the first stage A, thus saving processing resources on average over a number of tested articles 115. Running one large neural network to distinguish between all possible denominations of all currencies together every time would take more processing resource or processing time on average than the staged approach disclosed herein. One large network is actually more compute-efficient than many smaller networks if recognizing all currencies or classes over a given set. E.g. if a machine is configured to use EUR, GBP and USD, a single network that can recognize all currencies in one shot is less computationally intensive than executing a series of three smaller networks in a row, one for each currency, assuming the process needs to go on to the last in the series. However, by arranging the smaller neural networks into stacked stages, then often the later neural networks need not be triggered at all for a given item of cash, if already recognized by one of the earlier networks in the stack. Preferably, a priori knowledge or a technique such as reinforcement learning is used to place the most probable model in the first stage A. That is, the currencies, denominations and/or variants of the different stages are ordered according to their likelihood of being inserted into the machine 100 in the target location (e.g. target territory). For any given machine the majority of all cash is of the same currency and thus the processing time is reduced if this currency is evaluated first. One can set the sequence of evaluated currencies in such a way that the most time consuming currency (incl. authentication and fitness) can be evaluated first.

Also, another advantage of the stacked approach, is that there is no need to change the whole overall network if a currency from only one class has changed. The other networks 201 in the stack might also ideally be retrained to include the new design in their training sets for learning their respective "unrecognized" classes (the "other" class). E.g. say network 201a is retrained to recognize a new design of GBP; then the networks 201b, 201c that only recognise USD and EUR respectively might also ideally still be retrained with the new GBP in their 'unrecognisable' training sets. However, it is recognized herein that this is not necessary in practice. In fact, the unrecognized ("other") class will already have been trained on a large range of different types of article 115 (e.g. ^{~}100 types), for instance of various different denominations. So in the illustrated example, the USD network 201c (for instance) would have had included in its training set not just USD but also GBP, EUR and various other currencies such as CHF, SEK, CAD, etc., and even non-cash articles (so that it can learn to classify all of EUR, USD, CHF, SEK, CAD, etc., and non-cash articles, in its respective "other" class). This means that in practice, there is still a good chance that it will successfully classify a new design of GBP as "other" (i.e. "unrecognized"), since from the perspective of a network 201c that recognizes USD then the new design of GBP still looks quite different from USD and relatively similar to the old GBP design.

In an example, the first neural network 201a in the series or chain may be trained to recognize all denominations of GBP note (GBPS, GBP10, GBP20, GBP50); whilst the second neural network 201b in the series may be trained to recognize all denominations of EUR (EUR5, EUR10, EUR20, EUR50, EUR100, EUR200, EUR500); and the third neural network 201c in the series may be trained to recognize all denominations of USD (USD1, USD2, USD5, USD10, USD20, USD50, USD100). In this case the first stage A checks for GBP first, then only defers to the next stage B to check for EUR if the current article 115 is not recognized as one of the GBP denominations, etc. This saves the processing resource of performing a full check for all of GBP, EUR and USD together if that turns out not to be needed.

In another example, the neural network 201 at each stage could be trained to recognize a different individual denomination. E.g. the neural net 201a at the first stage A is trained to recognize GBP5, the neural net 201b at the second stage B is trained to recognize GBP10, etc. The algorithm 200 only reverts to checking for GBP10 if the first stage does not recognise the article 115 as a GBP5 note, etc. (or such like). Or in another example, the neural net 201a at the first stage A is trained to recognize a first design variant such as one or more denominations of English GBP note, and the neural net 201b at the second stage B is trained to recognize one or more denominations of a second design variant such as Scottish GBP notes. In this case, the algorithm 200 only reverts to checking for Scottish notes if it does not recognize the current article 115 as English GBP, or vice versa. Another such example would be polymer and paper variants of the same note or notes.

Chains of neural networks 201 with different combinations of denomination, currency and/or design variant could also be formed. E.g. first there may be a subseries of different networks 201a, 201b, 201c ... at respective stages A, B, C ... for recognizing different denominations of GBP, then another subseries for recognizing different denominations of EUR, then different denominations of USD, etc. E.g. the algorithm 200 first checks for GBP5, then if that fails checks for GBP10, then if that fails checks for GBP20, then if that fails checks for GBP50, then if that fails checks for EUR5, etc.

Note, in one example implementation each stage A, B, C would correspond on one currency. However, this does not necessarily mean that the network 201 at a given stage is only a two-class classifier, e.g. GPB vs. all others. In fact, from a given stage that is trained to recognize a given currency, in embodiments the respective network 201 is trained to classify from amongst multiple classifications and depending on the currency the number of classes might vary. E.g. for a GBP model the network 201 at a given stage may be trained to recognize the following classes: GBP 5 paper, GBP 5 polymer, GBP 10 paper, GBP 10 polymer, GBP 20 paper, GBP 20 polymer, GBP 50 paper, and the "others" class. Or more generally, the network 201 at each stage is trained to classify from amongst a respective set of classes which comprises the "others" class and a subset of one or more recognized classes. In embodiments different denominations recognized by the network 201 at a given stage may be sorted into different bins or compartments 116 as shown in Figure 1.

In some embodiments, different variants may be classified differently and optionally even sorted into different compartments 116. This is called issue split. E.g. it may be desired to split the polymer and paper notes of the GBP 10 in two classes because they have different security feature designs.

It will be appreciated that the particular currencies and denominations that the algorithm 200 is trained to recognize are described above by way of example only, and could be varied depending on the desired application, e.g. depending on the target country in which the machine 100 is to be deployed. Also, the order of the denominations and/or currencies in the series A, B, C, ... could be different in different embodiments. For instance, as mentioned, it may be desirable to place the stage for recognizing the most likely or common currency in the target territory at the top of the series (so USD as the first stage A if the machine 100 is to be deployed in the USA, but EUR if it is to be deployed in the Eurozone). This improves the chance of not having to revert to later stages in the series and therefore improves the saving on processing resource. This is particularly relevant if, for specific notes or coins in a later stage, more processing time is required than for others (e.g. due to size and/or authentication requirements and/or fitness classification). As another example, the stage for recognizing the most likely or common denomination may be placed at the top of the series (e.g. GBP10 as the first stage A if that is the most common note in circulation, then GBP20, then GBP5, then GBP50, or such like). And/or, the stage for recognizing the most likely or common variant may be placed at the top of the series (e.g. English GBP as the first stage A if deployed in England but Scottish GBP as the first stage if deployed in Scotland). The stages for different denominations and/or variants of different currencies could even be interleaved in the series. E.g. the check for EUR10 could come before GBP50, even in the UK, if EUR10 notes are more common than GBP50 notes. So for example the order could go GBP10, GBP20, GBP5, EUR10, EUR20, GBP50, USD10, etc.

Another advantage of the disclosed scheme is that it is modular. I.e. each individual neural network 201a, 201b, 201c, can be re-installed with a retrained version thereof, without needing to retrain the others in the series. Hence, if one government or central bank changes the design of its currency or even an individual denomination within its currency (say only the GBP20 note), then only the particular neural net 201a for recognizing that currency and/or denomination need be retrained and re-installed. Whereas if one large neural net was trained to recognize all currencies and denominations together, then this would require the whole neural net to be re-trained with training data from all currencies and denominations (including, say, all USD and EUR even though only the GBP20 has been redesigned) and deployed in the field.

If the article 115 is recognized, then in embodiments the algorithm 200 branches to the authentication block 245 to authenticate the recognized article 115. Authentication for the present purposes means authenticating as legal or genuine, i.e. not counterfeit. Preferably this means the article 115 under analysis is authenticated only if it positively passes the authentication test and not authenticated otherwise. Alternatively it could be authenticated as long as it fails a test for counterfeit cash, and only determined as non-authenticated if it passes the test for counterfeit cash. The authentication 245 may be performed based on another one or more trained neural networks, and/or based on one or more conventional rule-based techniques as known in the art. The authentication decision block 247 receives the result of the authentication 245 and, based on this, determines where the algorithm 200 will branch next. If the current article 115 under analysis is authenticated as genuine cash, then the algorithm 200 branches to the accept block 250 which controls the cash handling mechanism 101 to accept the authenticated item of cash. E.g. this may comprise sending the item of cash to the first receptacle 102. On the other hand, if the current article 115 is not authenticated, then the algorithm 200 branches to the counterfeit block 260 which controls the cash handling mechanism 101 to treat the article 115 as counterfeit cash. E.g. this may comprise sending the article 115 to the second receptacle 103 to be securely retained.

The authentication 245 and related steps 247, 260 could be optional depending on the intended application and regulations in the jurisdiction in question. E.g. a simple private cash counter need not necessarily impose counterfeit detection, but in some jurisdictions counters, TCAs/TCRs and vending machines or the like for use in commercial or banking environments are required to detect and retain counterfeit notes and/or coins. If authentication is not employed, then the algorithm 200 branches straight to the accept block 250 when an article 115 is recognized by one of the stages A, B, C (instead of the authentication block 245, authentication decision block 247 or counterfeit block 260)

More generally, optional block 245 could represent any one or more further tests to be applied after the recognition. In this case decision block 247 branches to acceptance 250 only if the recognized item of cash passes each (all) of the one or more further tests, but other wise to branch to rejection 260. For instance, as an alternative to authentication, or more likely in addition to it, the one or more further tests 245 may comprise a fitness test. That is, an article 115 may be cash and recognized as such, but may still be in a physically unsuitable condition to be put back in circulation or to be accepted. This condition may be referred to as being "unfit". The fitness test tests the physical condition and controls the cash handling mechanism 109 not to accept the unfit cash, even though it has been recognized as cash by the previous recognition phases 210, 220. Note also that in embodiments that employ more than one kind of test at block 245, there may be multiple second destinations, each corresponding to a different one of the tests. E.g. these could be different second receptacles 103, compartments therein, or outputs from the machine 100. So there may be one second destination for unauthenticated cash, and another second destination for authenticated but unfit cash. It is matter of design choice where cash that fails both tests it is sorted to. Alternatively, unauthenticated and unfit cash could simply be sorted to the same second receptacle 103 or output.

Fitness may be tested using conventional known techniques. Note that in embodiments the neural networks 201 will not determine fitness, other than as a by-product of not being able to recognise some very unfit notes. Stained notes may be recognized but fail a fitness test.

The disclosed techniques have a particular exemplary application to the recognition of bank notes. For instance, self-service and assisted service machines that accept banknotes for deposit in the Euro-zone and other jurisdictions are required to retain counterfeit notes. Also, traditional recognition systems within banking machines reject back to the user several counterfeit notes which are not identified as notes. The disclosed techniques can be used to fix the above and other problems.

It recognized herein that traditional machine methods of identifying banknotes are good at identifying authentic good condition banknotes, but if visual design features are missing or there is ink-dye staining, graffiti, soiling, damage or printing colour variations, then a sheet may often not be identified at all, typically being returned back to the machine user.

As disclosed herein, it has been discovered that artificial intelligence (AI) and in particular convolutional neural networks (CNNs) with deep learning are very good at using images of banknotes to see similarities and so recognising the identity, that is the currency, denomination, series/issue, facing and orientation, of a sheet even if it is a counterfeit or there is staining, graffiti or printing colour variations. Preferably, using CNNs 201 as in the present disclosure, there is little or no cash so badly damaged that it cannot be recognized anymore. Compared to the existing systems a CNN thus brings significant improvements. It is also recognized herein that Al's strength in seeing similarities can be a weakness when it comes to confirming authenticity. Hence in embodiments the CNNs 201 are used for the recognition but not the authentication. However this division is not essential. In the existing literature there are AI techniques discussed such as Siamese networks that address the authentication problem.

Embodiments disclosed herein utilize these facts to achieve a technical improvement by using AI for an identification step whilst using traditional techniques for the authentication of banknotes.

Embodiments retain the advantages of CNN and mitigate the disadvantage of applying CNNs in the field of banknote recognition by developing a system that may be described as "stacked" CNNs.

A notable point is that this system has stages and each stage has a 'reject class' that other than in the final stage can be re-purposed as a super class of rejects and items that are to be recognized as individual identities in a subsequent stage. Using the super class, the model is taught what banknotes other than those being identified in the current stage, might look like. The super class of a stage is put into a next stage CNN, unless it is the last stage, in which case it is the reject class. An example of a stack of three CNNs is shown in Figure 2, as has been described already.

The stacked CNN structure has an advantage that by finding the identity ("ID") of some of the banknotes at the first stage, it is not always required to perform the further stages.

In further embodiments, it is possible to take action when a suspected counterfeit is found. A suspected counterfeit is a sheet that has the identity of a banknote but fails the authentication. The action taken may be to stop the machine, or retain the sheet, or sort the sheet to a compartment for manual verification.

An identified banknote that has staining can either be identified as a genuine banknote if it passes an authenticity test and/or can be identified as a stained banknote of the detected identity utilising a modification to the known test for detecting soiled banknotes. The modification may be using an appropriate threshold. Embodiments allow the stained banknote to be recognised rather than merely rejected. In some situations, it is beneficial to detect a banknote that has been stained. Staining can be the result of Intelligent Banknote Neutralisation Systems (IBNS).

Embodiments disclosed herein allow a banknote with graffiti to be identified rather than merely rejected. If graffiti is unimportant sheets can be sorted based on being authentic or not. An identified sheet that fails the authenticity test can be handled in the same way as a suspect counterfeit. If graffiti is potentially important its existence can be detected by known methods, allowing for example action to be taken if there is graffiti on a particular facing of notes of a particular currency. This can be useful as for example deformation of the portrait of a monarch is taken very seriously in some regions, or in another example political slogans are written on a particular type of banknote. The action taken can be any of those for a suspected counterfeit or additionally for example sorting to a particular destination.

A banknote that is identified and separately checked for authenticity can be more tolerant of printing colour variations than a system that typically rejects a banknote with colour variations.

A technical advantage of CNNs is independence from prior knowledge and human effort in feature design. To define a traditional new pattern set is a manual process that is both skilled and time consuming. Whereas with CNN technology the network learns the filters that in traditional algorithms were hand-engineered.

It will be appreciated that the above embodiments have been described by way of example only.

More generally, according to one aspect disclosed herein, there is provided a cash handling machine according to claim 1 comprising: a cash handling mechanism for receiving physical articles including cash; sensing equipment comprising one or more sensors arranged to sense one or more properties of each of the articles received by the cash handling mechanism; processing equipment comprising one or more processors, the processing equipment being arranged to receive corresponding sensor data from the sensing equipment indicative of the sensed properties of each of the received articles; and memory comprising one or more memory devices, the memory storing code arranged to run on the processing equipment; wherein the code comprises a plurality of neural networks arranged in a series ordered from first to last, each trained to classify which of a respective set of classes the articles belong to based on the corresponding sensor data, the set of classes of each respective neural network comprising a different respective subset of one or more respective recognized classes classifying a respective one or more types of cash recognised by the respective neural network, and further comprising an unrecognized class into which all other articles other than the respective recognized types are classified; and wherein the code is configured so as, when run on the processing equipment, then for each of the articles received by the cash handling mechanism to perform the following algorithm starting with the first neural network in the series: i) use the neural network to classify the article into one of the respective set of classes based on the corresponding sensor data; then ii) if the classification determined in i) is one of the respective recognized classes, control the cash handling mechanism to accept the article, or do so subject to one or more further tests; but iii) if the classification in i) is the unrecognized class, then if the neural network is not the last in the series repeat i)-iii) with the next neural network in the series, but if the neural network is the last in the series control the cash handling mechanism to reject the article.

In embodiments, ii) may comprise: if the classification determined in i) is one of the respective recognized classes, then check whether the article passes the one or more further tests, and if so control the cash handling mechanism to accept the article by sending the article to a first destination, but if not control the cash handling mechanism to send to the article to a second destination different than the first.

In embodiments, said one or more further tests may comprise one or both of: an authentication to authenticate whether the article recognized as cash is genuine cash, and/or a fitness test to determine whether a physical condition of the cash is fit.

In embodiments, the one or more types of cash recognized by each of the respective neural networks consists of one or more denominations of a respective currency, the respective currencies of at least some of the neural networks being different than one another.

In embodiments, within each of the neural networks, the one or more types of cash recognized by that neural network may consist of one or more denominations of only a single respective currency.

In embodiments, within each of the neural networks, the types of cash recognized by that neural networks may consist of a plurality of denominations of the respective currency. Alternatively, the type of cash recognized by each of the neural networks could consist of only a single denomination of the respective currency.

In embodiments, within each of one, some or all of the neural networks, the types of cash recognized by that neural network may comprise different design variants of the same denomination.

More generally the subset of types of cash that each network is trained to recognized could include any one or more currencies, denominations, design variants or any combination thereof.

In embodiments, the cash comprises banknotes. Alternatively or additionally the cash may comprise coins.

In embodiments, the one or more sensors may comprise at least one image sensor arranged to capture one or more images of each of the received articles, the corresponding sensor data comprising image data representing the one or more captured images.

In embodiments, each of one, some or all of the neural networks may comprise a convolutional neural network trained to perform said classifying based on the image data. In embodiments, the cash handling machine may be deployed in a target location, and the ordering of the stages in said series may be in order of likelihood of the respective types of cash being received by the cash-handling machine at the target location.

According to another aspect disclosed herein there is provided a corresponding method. According to another aspect disclosed herein there is provided a method of training a plurality of neural networks to classify articles including cash according to claim 13, the method comprising:
training each of the neural networks to classify which of a respective set of classes the articles belong to based on corresponding sensor data, indicative of one or more sensed properties of each article, wherein the set of classes of each respective neural network comprises a different respective subset of one or more respective recognized classes classifying a respective one or more types of cash recognised by the respective neural network, and further comprises an unrecognized class into which all other articles other than the respective recognized types are classified; and arranging the neural networks in a series ordered from first to last so as to perform the following algorithm starting with the first neural network in the series: i) use the neural network to classify the article into one of the respective set of classes based on the corresponding sensor data; then ii) if the class determined in i) is one of the respective recognized classes, control a cash handling mechanism to accept the article, or do so subject to one or more further tests; but iii) if the class determined in i) is the unrecognized class, then if the neural network is not the last in the series repeat i)-iii) with the next neural network in the series, but if the neural network is the last in the series control the cash handling mechanism to send the article to reject the article.

Other variants or use cases of the disclosed techniques may become apparent to the person skilled in the art once given the disclosure herein. The scope of the disclosure is not limited by the described embodiments but only by the accompanying claims.

## Claims

1. A cash handling machine (100) comprising:
a cash handling mechanism (101) for receiving physical articles (115) including cash;
sensing equipment (104) comprising one or more sensors arranged to sense one or more properties of each of the articles received by the cash handling mechanism (101);
processing equipment (105) comprising one or more processors, the processing equipment (105) being arranged to receive corresponding sensor data (114) from the sensing equipment (104) indicative of the sensed properties of each of the received articles (115); and
memory (106) comprising one or more memory devices, the memory storing code arranged to run on the processing equipment (105);
wherein the code comprises a plurality of neural networks (201a, 201b, 201c) arranged in a series ordered from first to last, each trained to classify which of a respective set of classes the articles (115) belong to based on the corresponding sensor data (114), the set of classes of each respective neural network (201a, 201b, 201c) comprising a different respective subset of one or more respective recognized classes classifying a respective one or more types of cash recognised by the respective neural network (201a, 201b, 201c), and further comprising an unrecognized class into which all other articles (115) other than the respective recognized types are classified;
wherein the one or more types of cash recognized by each of the respective neural networks (201a, 201b, 201c) consist of one or more denominations of a respective currency, the respective currencies of at least some of the neural networks (201a, 201b, 201c) being different than one another, and
wherein the code is configured so as, when run on the processing equipment (105), then for each of the articles (115)received by the cash handling mechanism (101) to perform the following algorithm starting with the first neural network (201a) in the series:
i) use the neural network (201a, 201b, 201c) to classify the article (115) into one of the respective set of classes based on the corresponding sensor data (114); then
ii) if the classification determined in i) is one of the respective recognized classes, control the cash handling mechanism (101) to accept the article (115), or do so subject to one or more further tests; but
iii) if the classification in i) is the unrecognized class, then if the neural network (201a, 201b, 201c) is not the last in the series repeat i)-iii) with the next neural network (201a, 201b, 201c) in the series, but if the neural network (201a, 201b, 201c) is the last in the series control the cash handling mechanism (101) to reject the article (115).

2. The cash handling machine (100) of claim 1, wherein ii) comprises:
ii) if the classification determined in i) is one of the respective recognized classes, then check whether the article (115) passes the one or more further tests, and if so control the cash handling mechanism (101) to accept the article (115) by sending the article (115) to a first destination, but if not control the cash handling mechanism (101) to send to the article (115) to a second destination different than the first, and preferably wherein said one or more further tests comprise one or both of:
- an authentication to authenticate whether the article (115) recognized as cash is genuine cash, and/or
- a fitness test to determine whether a physical condition of the cash is fit.

3. The cash handling machine (100) of claim 1, wherein within each of the neural networks (201a, 201b, 201c), the one or more types of cash recognized by that neural network (201a, 201b, 201c) consist of one or more denominations of only a single respective currency, and preferably wherein the types of cash recognized by each of the neural networks (201a, 201b, 201c) consists of a plurality of denominations of the respective currency.

4. The cash handling machine (100) of any preceding claim, wherein the types of cash recognized by at least one of the neural networks (201a, 201b, 201c) comprise different design variants of the same denomination.

5. The cash handling machine (100) of any preceding claim, wherein the cash comprises banknotes.

6. The cash handling machine (100) of any preceding claim, wherein the one or more sensors comprise at least one image sensor arranged to capture one or more images of each of the received articles (115), the corresponding sensor data (114) comprising image data representing the one or more captured images.

7. The cash handling machine (100) of claim 6, wherein at least one of the neural networks (201a, 201b, 201c) comprises a convolutional neural network trained to perform said classifying based on the image data.

8. The cash handling machine (100) of any preceding claim, wherein the cash handling machine (100) is deployed in a target location, and the ordering of stages in said series is in order of likelihood of the respective types of cash being received by the cash-handling machine (100) at the target location.

9. A computer-implemented method comprising:
receive corresponding sensor data (114) indicative of one or more sensed properties of each of a plurality of received articles (115) including cash;
implementing a plurality of neural networks (201a, 201b, 201c) arranged in a series ordered from first to last, each trained to classify which of a respective set of classes the articles belong to based on the corresponding sensor data (114), the set of classes of each neural network (201a, 201b, 201c) comprising a different respective subset of one or more respective recognized classes classifying a respective one or more recognized types of cash, and further comprising an unrecognized class into which all other articles other than the respective recognized types are classified;
wherein the one or more types of cash recognized by each of the respective neural networks (201a, 201b, 201c) consist of one or more denominations of a respective currency, the respective currencies of at least some of the neural networks (201a, 201b, 201c) being different than one another,
and performing the following algorithm starting with the first neural network (201a, 201b, 201c) in the series:
i) use the neural network (201a, 201b, 201c) to classify the article into one of the respective set of classes based on the corresponding sensor data (114); then
ii) if the class determined in i) is one of the respective recognized classes, control a cash handling mechanism (101) to accept the article, or do so subject to one or more further tests; but
iii) if the class determined in i) is the unrecognized class, then if the neural network (201a, 201b, 201c) is not the last in the series repeat i)-iii) with the next neural network (201a, 201b, 201c) in the series, but if the neural network (201a, 201b, 201c) is the last in the series control the cash handling mechanism (101) to send the article (115) to reject the article (115).

10. The method of claim 9, wherein the types of cash recognized by at least one of the neural networks (201a, 201b, 201c) comprise different design variants of the same denomination.

11. The method of claim 9 or claim 10, wherein the one or more sensors comprise an image sensor arranged to capture an image of each of the received articles (115), the corresponding sensor data comprising image data representing the captured image, and preferably, wherein at least one of the neural networks (201a, 201b, 201c) comprises a convolutional neural network trained to perform said classifying based on the image data.

12. A computer program embodied on computer-readable storage and configured so as when run on one or more processors to perform the method of claim 10 or claim 11.

13. A method of training a plurality of neural networks (201a, 201b, 201c) to classify articles (115) including cash, the method comprising:
training each of the neural networks (201a, 201b, 201c) to classify which of a respective set of classes the articles belong to based on corresponding sensor data (114), indicative of one or more sensed properties of each article (115), wherein the set of classes of each respective neural network comprises a different respective subset of one or more respective recognized classes classifying a respective one or more types of cash recognised by the respective neural network (201a, 201b, 201c), and further comprises an unrecognized class into which all other articles other than the respective recognized types are classified;
wherein the one or more types of cash recognized by each of the respective neural networks (201a, 201b, 201c) consist of one or more denominations of a respective currency, the respective currencies of at least some of the neural networks (201a, 201b, 201c) being different than one another, and
arranging the neural networks (201a, 201b, 201c) in a series ordered from first to last so as to perform the following algorithm starting with the first neural network (201a, 201b, 201c) in the series:
i) use the neural network (201a, 201b, 201c) to classify the article (115) into one of the respective set of classes based on the corresponding sensor data (114); then
ii) if the class determined in i) is one of the respective recognized classes, control a cash handling mechanism (100) to accept the article (115), or do so subject to one or more further tests; but
iii) if the class determined in i) is the unrecognized class, then if the neural network (201a, 201b, 201c) is not the last in the series repeat i)-iii) with the next neural network (201a, 201b, 201c) in the series, but if the neural network is the last in the series control the cash handling mechanism (101) to send the article (115) to reject the article (115).

## Patentansprüche

1. Bargeldhandhabungsmaschine (100), aufweisend:
einen Bargeldhandhabungsmechanismus (101) zum Aufnehmen von physischen Artikeln (115) einschließlich Bargeld;
eine Erfassungsausrüstung (104), die ein oder mehr Sensoren aufweist, die eingerichtet sind, um ein oder mehr Eigenschaften von jedem der vom Bargeldhandhabungsmechanismus (101) empfangenen Artikeln zu erfassen;
eine Verarbeitungsausrüstung (105), die ein oder mehr Prozessoren aufweist, wobei die Verarbeitungsausrüstung (105) eingerichtet ist, um entsprechende Sensordaten (114) von der Erfassungsausrüstung (104) zu empfangen, die die erfassten Eigenschaften jedes der empfangenen Artikel (115) anzeigen; und
einen Speicher (106), der ein oder mehr Speichervorrichtungen aufweist, wobei der Code speichernde Speicher eingerichtet ist, um auf der Verarbeitungsausrüstung (105) zu laufen;
wobei der Code mehrere neuronale Netze (201a, 201b, 201c) aufweist, die in einer vom ersten bis zum letzten geordneten Reihe angeordnet sind, wobei jedes trainiert ist, um basierend auf den entsprechenden Sensordaten (114) zu klassifizieren, zu welcher eines jeweiligen Satzes von Klassen die Artikel (115) gehören, wobei der Satz von Klassen jedes jeweiligen neuronalen Netzes (201a, 201b, 201c) eine unterschiedliche jeweilige Teilmenge von ein oder mehr jeweiligen erkannten Klassen aufweist, die jeweilige ein oder mehr Arten von Bargeld klassifizieren, die vom jeweiligen neuronalen Netz (201a, 201b, 201c) erkannt werden, und ferner eine unerkannte Klasse aufweist, in die alle anderen Artikel (115) außer den jeweiligen erkannten Arten klassifiziert werden;
wobei die ein oder mehr Arten von Bargeld, die von jedem der jeweiligen neuronalen Netze (201a, 201b, 201c) erkannt werden, aus ein oder mehr Nennwerten einer jeweiligen Währung bestehen, wobei die jeweiligen Währungen von wenigstens einigen der neuronalen Netze (201a, 201b, 201c) voneinander verschieden sind, und
wobei der Code so konfiguriert ist, dass er, wenn er auf der Verarbeitungsausrüstung (105) ausgeführt wird, dann für jeden der vom Bargeldhandhabungsmechanismus (101) empfangenen Artikel (115) den folgenden Algorithmus beginnend mit dem ersten neuronalen Netz (201a) in der Reihe durchführt:
i) Verwenden des neuronalen Netzes (201a, 201b, 201c) zum Klassifizieren des Artikels (115) in einen des jeweiligen Satzes von Klassen basierend auf den entsprechenden Sensordaten (114); dann
ii) wenn die in i) ermittelte Klassifizierung eine der jeweiligen erkannten Klassen ist, Steuern des Bargeldhandhabungsmechanismus (101), um den Artikel (115) aufzunehmen, oder dies vorbehaltlich eines oder mehrerer weiterer Tests tun; aber
iii) wenn die Klassifizierung in i) die unerkannte Klasse ist, dann, wenn das neuronale Netz (201a, 201b, 201c) nicht das letzte in der Reihe ist, Wiederholen der i) - iii) mit dem nächsten neuronalen Netz (201a, 201b, 201c) in der Reihe, aber wenn das neuronale Netz (201a, 201b, 201c) das letzte in der Reihe ist, Steuern des Bargeldhandhabungsmechanismus (101), um den Artikel (115) zurückzuweisen.

2. Bargeldhandhabungsmaschine (100) nach Anspruch 1, wobei ii) aufweist:
ii) wenn die in i) ermittelte Klassifizierung eine der jeweiligen erkannten Klassen ist, dann Prüfen, ob der Artikel (115) die ein oder mehr weiteren Tests besteht, und wenn dies der Fall ist, Steuern des Bargeldhandhabungsmechanismus (101), um den Artikel (115) zu anzunehmen, indem er den Artikel (115) an einen ersten Bestimmungsort sendet, aber wenn dies nicht der Fall ist, Steuern des Bargeldhandhabungsmechanismus (101), um den Artikel (115) an einen zweiten Bestimmungsort unterschieden vom ersten zu senden, und wobei vorzugsweise die ein oder mehr weiteren Tests einen oder beide aufweisen von:
- einer Authentifizierung, um zu authentifizieren, ob der als Bargeld erkannte Artikel (115) echtes Bargeld ist, und/oder
- eines Eignungstests, um festzustellen, ob ein körperlicher Zustand des Bargelds geeignet ist.

3. Bargeldhandhabungsmaschine (100) nach Anspruch 1, wobei in jedem der neuronalen Netze (201a, 201b, 201c) die ein oder mehr Arten von Bargeld, die von diesem neuronalen Netz (201a, 201b, 201c) erkannt werden, aus ein oder mehr Nennwerten von nur einer einzigen jeweiligen Währung bestehen, und wobei vorzugsweise die von jedem der neuronalen Netze (201a, 201b, 201c) erkannten Bargeldarten aus mehreren Nennwerten der jeweiligen Währung bestehen.

4. Bargeldhandhabungsmaschine (100) nach einem der vorhergehenden Ansprüche, wobei die von wenigstens einem der neuronalen Netze (201a, 201b, 201c) erkannten Bargeldarten unterschiedliche Ausführungsvarianten desselben Nennwertes aufweisen.

5. Bargeldhandhabungsmaschine (100) nach einem der vorhergehenden Ansprüche, wobei das Bargeld Banknoten aufweist.

6. Bargeldhandhabungsmaschine (100) nach einem der vorhergehenden Ansprüche, wobei die ein oder mehr Sensoren wenigstens einen Bildsensor aufweisen, der eingerichtet ist, um ein oder mehr Bilder jedes der empfangenen Artikel (115) aufzunehmen, wobei die entsprechenden Sensordaten (114) die die ein oder mehr aufgenommenen Bilder darstellende Bilddaten aufweisen.

7. Bargeldhandhabungsmaschine (100) nach Anspruch 6, wobei wenigstens eines der neuronalen Netze (201a, 201b, 201c) ein neuronales Faltungsnetz aufweist, das trainiert ist, um das Klassifizieren basierend auf den Bilddaten durchzuführen.

8. Bargeldhandhabungsmaschine (100) nach einem der vorhergehenden Ansprüche, wobei die Bargeldhandhabungsmaschine (100) in einem Zielort eingesetzt wird und die Reihenfolge der Stufen in der Reihe in der Reihenfolge der Wahrscheinlichkeit ist, dass die jeweiligen Bargeldarten von der Bargeldhandhabungsmaschine (100) am Zielort empfangen werden.

9. Computerimplementiertes Verfahren, aufweisend:
Empfangen von entsprechenden Sensordaten (114), die ein oder mehr erfasste Eigenschaften jedes von mehreren empfangenen Artikeln (115) einschließlich Bargeld anzeigen;
Implementieren von mehreren neuronalen Netzen (201a, 201b, 201c), die in einer vom ersten bis zum letzten geordneten Reihe angeordnet sind, wobei jedes trainiert ist, um basierend auf den entsprechenden Sensordaten (114) zu klassifizieren, zu welcher eines jeweiligen Satzes von Klassen die Artikel gehören,
wobei der Satz von Klassen jedes neuronalen Netzes (201a, 201b, 201c) eine unterschiedliche jeweilige Teilmenge von ein oder mehr jeweiligen erkannten Klassen aufweist, die jeweilige ein oder mehr erkannte Bargeldarten klassifizieren, und ferner eine unerkannte Klasse aufweist, in die alle anderen Artikel außer den jeweiligen erkannten Arten klassifiziert werden;
wobei die ein oder mehr Bargeldarten, die von jedem der jeweiligen neuronalen Netze (201a, 201b, 201c) erkannt werden, aus ein oder mehr Nennwerten einer jeweiligen Währung bestehen, wobei die jeweiligen Währungen von wenigstens einigen der neuronalen Netze (201a, 201b, 201c) voneinander verschieden sind, und Durchführen des folgenden Algorithmus beginnend mit dem ersten neuronalen Netz (201a, 201b, 201c) in der Reihe:
i) Verwenden des neuronalen Netzes (201a, 201b, 201c) zum Klassifizieren des Artikels in einen des jeweiligen Satzes von Klassen basierend auf den entsprechenden Sensordaten (114); dann
ii) wenn die in i) ermittelte Klasse eine der jeweiligen erkannten Klassen ist, Steuern eines Geldhandhabungsmechanismus (101), um den Artikel aufzunehmen, oder dies vorbehaltlich eines oder mehrerer weiterer Tests tun; aber
iii) wenn die in i) bestimmte Klasse die unerkannte Klasse ist, dann, wenn das neuronale Netz (201a, 201b, 201c) nicht das letzte in der Reihe ist, Wiederholen der (i) - iii) mit dem nächsten neuronalen Netz (201a, 201b, 201c) in der Reihe, aber wenn das neuronale Netz (201a, 201b, 201c) das letzte in der Reihe ist, Steuern des Bargeldhandhabungsmechanismus (101), um den Artikel (115) zu senden, um den Artikel (115) zurückzuweisen.

10. Verfahren nach Anspruch 9, wobei die von wenigstens einem der neuronalen Netze (201a, 201b, 201c) erkannten Bargeldarten unterschiedliche Ausführungsvarianten desselben Nennwertes aufweisen.

11. Verfahren nach Anspruch 9 oder Anspruch 10, wobei die ein oder mehr Sensoren einen Bildsensor aufweisen, der eingerichtet ist, um ein Bild von jedem der empfangenen Artikel (115) aufzunehmen, wobei die entsprechenden Sensordaten das aufgenommene Bild darstellende Bilddaten aufweisen, wobei wenigstens eines der neuronalen Netze (201a, 201b, 201c) ein neuronales Faltungsnetz aufweist, das trainiert ist, um das Klassifizieren basierend auf den Bilddaten durchzuführen.

12. Computerprogramm, das auf einem computerlesbaren Speicher verkörpert ist und konfiguriert ist, um, wenn es auf ein oder mehr Prozessoren ausgeführt wird, das Verfahren nach Anspruch 10 oder Anspruch 11 durchführt.

13. Verfahren zum Trainieren von mehreren neuronalen Netzen (201a, 201b, 201c) zum Klassifizieren von Artikeln (115) einschließlich Bargeld, wobei das Verfahren aufweist:
Trainieren jedes der neuronalen Netze (201a, 201b, 201c), um basierend auf entsprechenden Sensordaten (114) die ein oder mehr erfasste Eigenschaften jedes Artikels (115) anzeigen, zu klassifizieren, zu welcher eines jeweiligen Satzes von Klassen die Artikel gehören, wobei der Satz von Klassen jedes jeweiligen neuronalen Netzes eine unterschiedliche jeweilige Teilmenge von ein oder mehr jeweiligen erkannten Klassen aufweist, die jeweilige ein oder mehr Arten von Bargeld klassifizieren, die vom jeweiligen neuronalen Netz (201a, 201b, 201c) erkannt werden, und ferner eine unerkannte Klasse aufweist, in die alle anderen Artikel außer den jeweiligen erkannten Arten klassifiziert werden;
wobei die ein oder mehr Arten von Bargeld, die von jedem der jeweiligen neuronalen Netze (201a, 201b, 201c) erkannt werden, aus ein oder mehr Nennwerten einer jeweiligen Währung bestehen, wobei die jeweiligen Währungen von wenigstens einigen der neuronalen Netze (201a, 201b, 201c) voneinander verschieden sind, und
Anordnen der neuronalen Netze (201a, 201b, 201c) in einer vom ersten bis zum letzten geordneten Reihe, um den folgenden Algorithmus beginnend mit dem ersten neuronalen Netz (201a, 201b, 201c) in der Reihe durchzuführen:
i) Verwenden des neuronalen Netzes (201a, 201b, 201c) zum Klassifizieren des Artikels (115) in einen des jeweiligen Satzes von Klassen basierend auf den entsprechenden Sensordaten (114); dann
ii) wenn die in i) ermittelte Klasse eine der jeweiligen erkannten Klassen ist, Steuern eines Bargeldhandhabungsmechanismus (101), um den Artikel (115) aufzunehmen, oder dies vorbehaltlich eines oder mehrerer weiterer Tests tun; aber
iii) wenn die in i) ermittelte Klasse die unerkannte Klasse ist, dann, wenn das neuronale Netz (201a, 201b, 201c) nicht das letzte in der Reihe ist, Wiederholen von (i) - iii) mit dem nächsten neuronalen Netz (201a, 201b, 201c) in der Reihe, aber wenn das neuronale Netz das letzte in der Reihe ist, Steuern des Bargeldhandhabungsmechanismus (101), um den Artikel (115) zu senden, um den Artikel (115) zurückzuweisen.

## Revendications

1. Machine de manipulation d'argent liquide (100) comprenant :
un mécanisme de manipulation d'argent liquide (101) destiné à recevoir des articles physiques (115), y compris de l'argent liquide ;
un équipement de détection (104) comprenant un ou plusieurs capteurs agencés pour détecter une ou plusieurs propriétés de chacun des articles reçus par le mécanisme de manipulation d'argent liquide (101) ;
un équipement de traitement (105) comprenant un ou plusieurs processeurs, l'équipement de traitement (105) étant agencé pour recevoir des données de capteur correspondantes (114) provenant de l'équipement de détection (104) qui sont indicatives des propriétés détectées de chacun des articles reçus (115) ; et
une mémoire (106) comprenant un ou plusieurs dispositifs de mémoire, la mémoire stockant un code agencé pour s'exécuter sur l'équipement de traitement (105),
dans laquelle le code comprend une pluralité de réseaux de neurones (201a, 201b, 201c) agencés en une série ordonnée partant du premier jusqu'au dernier, chacun étant entrainé pour classer les articles (115) selon leur appartenance à un ensemble respectif de classes sur la base des données de capteur correspondantes (114), l'ensemble de classes de chaque réseau de neurones respectif (201a, 201b, 201c) comprenant un sous-ensemble respectif différent d'une ou plusieurs classes reconnues respectives classant un ou plusieurs types respectifs d'argent liquide reconnus par le réseau de neurones respectif (201a, 201b, 201c) et comprenant en outre une classe non reconnue dans laquelle tous les autres articles (115) autres que les types reconnus respectifs sont classés,
dans laquelle lesdits un ou plusieurs types d'argent liquide reconnus par chacun des réseaux de neurones respectifs (201a, 201b, 201c) se composent d'une ou plusieurs coupures d'une monnaie respective, les monnaies respectives d'au moins certains des réseaux de neurones (201a, 201b, 201c) étant différentes l'une de l'autre, et
dans laquelle le code est configuré de manière, lorsqu'il est exécuté sur l'équipement de traitement (105), puis pour chacun des articles (115) reçus par le mécanisme de manipulation d'argent liquide (101), à effectuer l'algorithme suivant en commençant par le premier réseau de neurones (201a) de la série :
i) utiliser le réseau de neurones (201a, 201b, 201c) pour classer l'article (115) dans l'un de l'ensemble respectif de classes sur la base des données de capteur correspondantes (114) ; puis
ii) si le classement déterminé en i) concerne l'une des classes reconnues respectives, contrôler le mécanisme de manipulation d'argent liquide (101) pour accepter l'article (115), ou le faire sous réserve d'un ou plusieurs tests supplémentaires ; mais
iii) si le classement en i) concerne la classe non reconnue, alors si le réseau de neurones (201a, 201b, 201c) n'est pas le dernier de la série, répéter i)-iii) avec le réseau de neurones suivant (201a, 201b, 201c) dans la série, mais si le réseau de neurones (201a, 201b, 201c) est le dernier de la série, contrôler le mécanisme de manipulation d'argent liquide (101) pour rejeter l'article (115).

2. Machine de manipulation d'argent liquide (100) selon la revendication 1, dans laquelle ii) consiste à :
ii) si le classement déterminé en i) concerne l'une des classes reconnues respectives, alors vérifier si l'article (115) réussit lesdits un ou plusieurs tests supplémentaires, et si c'est le cas, contrôler le mécanisme de manipulation d'argent liquide (101) pour accepter l'article (115) en envoyant l'article (115) vers une première destination, mais si ce n'est pas le cas, contrôler le mécanisme de manipulation d'argent liquide (101) pour envoyer l'article (115) vers une deuxième destination différente de la première, et de préférence lesdits un ou plusieurs tests supplémentaires comprenant l'un ou les deux parmi :
- une authentification pour authentifier si l'article (115) reconnu comme de l'argent liquide est véritablement de l'argent liquide, et/ou
- un test de compatibilité pour déterminer si une condition physique de l'argent liquide est compatible.

3. Machine de manipulation d'argent liquide (100) selon la revendication 1, dans laquelle, au sein de chacun des réseaux de neurones (201a, 201b, 201c), lesdits un ou plusieurs types d'argent liquide reconnus par ce réseau de neurones (201a, 201b, 201c) se composent d'une ou plusieurs coupures de seulement une unique monnaie respective, et de préférence dans laquelle les types d'argent liquide reconnus par chacun des réseaux de neurones (201a, 201b, 201c) se composent d'une pluralité de coupures de la monnaie respective.

4. Machine de manipulation d'argent liquide (100) selon l'une quelconque des revendications précédentes, dans laquelle les types d'argent liquide reconnus par au moins l'un des réseaux de neurones (201a, 201b, 201c) comprennent différentes variantes de design de la même coupure.

5. Machine de manipulation d'argent liquide (100) selon l'une quelconque des revendications précédentes, dans laquelle l'argent liquide comprend des billets de banque.

6. Machine de manipulation d'argent liquide (100) selon l'une quelconque des revendications précédentes, dans laquelle lesdits un ou plusieurs capteurs comprennent au moins un capteur d'image agencé pour capturer une ou plusieurs images de chacun des articles reçus (115), les données de capteur correspondantes (114) comprenant des données d'image représentant lesdites une ou plusieurs images capturées.

7. Machine de manipulation d'argent liquide (100) selon la revendication 6, dans laquelle au moins l'un des réseaux de neurones (201a, 201b, 201c) comprend un réseau de neurones convolutif qui est entrainé pour effectuer ledit classement sur la base des données d'image.

8. Machine de manipulation d'argent liquide (100) selon l'une quelconque des revendications précédentes, dans laquelle la machine de manipulation d'argent liquide (100) est déployée dans un emplacement cible, et l'ordre des étapes dans ladite série suit l'ordre de probabilité que les types respectifs d'argent liquide soient reçus par la machine de manipulation d'argent liquide (100) au niveau de l'emplacement cible.

9. Procédé mis en oeuvre par ordinateur, consistant à :
recevoir des données de capteur correspondantes (114) qui sont indicatives d'une ou plusieurs propriétés détectées de chacun d'une pluralité d'articles reçus (115), y compris de l'argent liquide ;
mettre en oeuvre une pluralité de réseaux de neurones (201a, 201b, 201c) agencés en une série ordonnée partant du premier jusqu'au dernier, chacun étant entrainé pour classer les articles selon leur appartenance à un ensemble respectif de classes sur la base des données de capteur correspondantes (114), l'ensemble de classes de chaque réseau de neurones (201a, 201b, 201c) comprenant un sous-ensemble respectif différent d'une ou plusieurs classes reconnues respectives classant un ou plusieurs types reconnus respectifs d'argent liquide et comprenant en outre une classe non reconnue dans laquelle tous les autres articles autres que les types reconnus respectifs sont classés,
dans lequel lesdits un ou plusieurs types d' argent liquide reconnus par chacun des réseaux de neurones respectifs (201a, 201b, 201c) se composent d'une ou plusieurs coupures d'une monnaie respective, les monnaies respectives d'au moins certains des réseaux de neurones (201a, 201b, 201c) étant différentes l'une de l'autre ; et
effectuer l'algorithme suivant en commençant par le premier réseau de neurones (201a, 201b, 201c) de la série :
i) utiliser le réseau de neurones (201a, 201b, 201c) pour classer l'article dans l'un de l'ensemble respectif de classes sur la base des données de capteur correspondantes (114) ; puis
ii) si la classe déterminée en i) est l'une des classes reconnues respectives, contrôler un mécanisme de manipulation d'argent liquide (101) pour accepter l'article, ou le faire sous réserve d'un ou plusieurs tests supplémentaires ; mais
iii) si la classe déterminée en i) est la classe non reconnue, alors si le réseau de neurones (201a, 201b, 201c) n'est pas le dernier de la série, répéter i)-iii) avec le réseau de neurones suivant (201a, 201b, 201c) dans la série, mais si le réseau de neurones (201a, 201b, 201c) est le dernier de la série, contrôler le mécanisme de manipulation d'argent liquide (101) pour envoyer l'article (115), pour rejeter l'article (115).

10. Procédé selon la revendication 9, dans lequel les types d'argent liquide reconnus par au moins l'un des réseaux de neurones (201a, 201b, 201c) comprennent différentes variantes de design de la même coupure.

11. Procédé selon la revendication 9 ou 10, dans lequel lesdits un ou plusieurs capteurs comprennent un capteur d'image agencé pour capturer une image de chacun des articles reçus (115), les données de capteur correspondantes comprenant des données d'image représentant l'image capturée, et de préférence dans lequel au moins l'un des réseaux de neurones (201a, 201b, 201c) comprend un réseau de neurones convolutif qui est entrainé pour effectuer ledit classement sur la base des données d'image.

12. Programme informatique, lequel est incorporé dans une mémoire lisible par ordinateur et configuré de manière, lorsqu'il est exécuté sur un ou plusieurs processeurs, à effectuer le procédé selon la revendication 10 ou 11.

13. Procédé d'entraînement d'une pluralité de réseaux de neurones (201a, 201b, 201c) pour classer des articles (115) incluant de l'argent liquide, le procédé consistant à :
entraîner chacun des réseaux de neurones (201a, 201b, 201c) à classer les articles selon leur appartenance à un ensemble respectif de classes sur la base des données de capteur correspondantes (114) qui sont indicatives d'une ou plusieurs propriétés détectées de chaque article (115),
dans lequel l'ensemble de classes de chaque réseau de neurones respectif comprend un sous-ensemble respectif différent d'une ou plusieurs classes reconnues respectives classant un ou plusieurs types respectifs d'argent liquide reconnus par le réseau de neurones respectif (201a, 201b, 201c) et comprend en outre une classe non reconnue dans laquelle tous les autres articles autres que les types reconnus respectifs sont classés,
dans lequel lesdits un ou plusieurs types d' argent liquide reconnus par chacun des réseaux de neurones respectifs (201a, 201b, 201c) se composent d'une ou plusieurs coupures d'une monnaie respective, les monnaies respectives d'au moins certains des réseaux de neurones (201a, 201b, 201c) étant différentes l'une de l'autre ; et
agencer les réseaux de neurones (201a, 201b, 201c) en une série ordonnée partant du premier jusqu'au dernier afin d'effectuer l'algorithme suivant en commençant par le premier réseau de neurones (201a, 201b, 201c) de la série :
i) utiliser le réseau de neurones (201a, 201b, 201c) pour classer l'article (115) dans l'un de l'ensemble respectif de classes sur la base des données de capteur correspondantes (114) ; puis
ii) si la classe déterminée en i) est l'une des classes reconnues respectives, contrôler un mécanisme de manipulation d'argent liquide (101) pour accepter l'article (115), ou le faire sous réserve d'un ou plusieurs tests supplémentaires ; mais
iii) si la classe déterminée en i) est la classe non reconnue, alors si le réseau de neurones (201a, 201b, 201c) n'est pas le dernier de la série, répéter i)-iii) avec le réseau de neurones suivant (201a, 201b, 201c) dans la série, mais si le réseau de neurones est le dernier de la série, contrôler le mécanisme de manipulation d'argent liquide (101) pour envoyer l'article (115), pour rejeter l'article (115).
